# EUROPÄISCHE PATENTSCHRIFT

(11) **EP 3 446 921 B1**
(45) Veröffentlichungstag und Bekanntmachung des Hinweises auf die Patenterteilung: **26.01.2022**
(21) Anmeldenummer: 18190630.6
(22) Anmeldetag: 24.08.2018
(51) Int. Cl.: B60P 1/38

(54) **FAHRZEUGAUFBAU MIT INTEGRIERTEM ENDLOS-FÖRDERBAND**
VEHICLE BODY STRUCTURE WITH INTEGRATED ENDLESS CONVEYOR BELT
CONSTRUCTION DE VÉHICULE À BANDE TRANSPORTEUSE SANS FIN INTÉGRÉE

(30) Priorität: 24.08.2017 DE 202017105085 U
(43) Veröffentlichungstag der Anmeldung: 27.02.2019
(73) Patentinhaber: B. Strautmann & Söhne GmbH u. Co. KG, 49196 Bad Laer (DE)
(72) Erfinder: Oelgeschläger, Oliver, 49163 Bohmte (DE)
(74) Vertreter: Dr. Träger & Strautmann PAe PartG mbB

(56) Entgegenhaltungen:
- EP-A1- 0 199 299
- EP-A1- 0 659 663
- WO-A1-2004/085292
- DE-A1-102015 101 118
- DE-B3-102015 004 326
- DE-U1- 29 805 995
- JP-A- S58 202 205
- JP-U- H03 125 722
- US-A- 3 407 673

## Beschreibung

Die Erfindung bezieht sich auf einen Fahrzeugaufbau zum Transport von Schütt- und/oder Stückgut, welcher umfasst:
- ein Chassis und einen rechteckigen Laderaum, dessen Boden ein in einen heckseitigen Abwurfbereich auslaufendes Endlos-Förderband umfasst,
- wobei das Endlos-Förderband einen Obertrum und einen Untertrum und dazwischen liegende, voneinander beabstandete Tragelemente aufweist, welche jeweils quer zu einer Förderrichtung liegend an Längsträgern des Chassis gelagert sind,
- wobei der Obertrum sich an den Tragelementen abstützt,
- wobei der Untertrum sich auf zwei Andrückrollen abstützt, welche zwischen einer Kopftrommel und einer Hecktrommel des Endlos-Förderbandes angeordnet sind und den Untertrum anspannen.

Bei einem Fahrzeugaufbau mit integriertem Endlos-Förderband können Veränderungen des inneren Spannungszustandes auftreten. Die Ursachen hierfür können beispielsweise in einer asymmetrischen Beladung, einer Erwärmung des Förderbandes oder einem Schleifen des Förderbandes, z. B. auf Grund verklemmter Fremdteile, liegen. Daraus resultierende Steuerkräfte können zur Bandlaufverzerrung führen.

Bei den Fahrzeugaufbauten dieser Art kann es sich um einen Anhänger oder ein selbstfahrendes Fahrzeug handeln. Problematisch bei den Fahrzeugaufbauten mit eingebautem Endlos-Förderband ist die Zentrierung des Endlos-Förderbandes. Bei freistehenden Förderbändern können einige Tragrollen, an denen sich der Obertrum abstützt, horizontal verstellbar angeordnet sein, um den Zentriereffekt zu erzielen. Diese Bandzentrierung ist jedoch für die fahrzeuggebundenen Endlos-Förderbänder ungeeignet. Eine an sich bekannte, horizontale Verstellung mehrerer, zwischen dem Obertrum und Untertrum liegenden Tragrollen, welche dann um ca. 2° - 4° auf Sturz gestellt werden sollen, kommt nicht in Frage, da das Endlos-Förderband von seinen beiden Seiten her wegen einer dichten Verbauung am Chassis nicht bzw. nur schwer zugänglich ist.

Ebenso lässt sich eine Bandsteuerung mit Hilfe sogenannter Einschnürrollen, also einer zylindrischen Rolle, die entlang einer zur Rollenachse parallelen Schrägebene einstellbar ist, bedingt durch den engen Bauraum am Fahrzeug nur schwer realisieren. Die Schrägebene kann hier durch eine die Auf- und Ablaufpunkte des Bandes verbindende Sekante definiert werden. Eine solche Bandsteuerung wird bei frei stehenden, nicht fahrzeuggebundenen Endlos-Förderbändern eingesetzt.

Aus DE 100 14 447 C2 ist ein Fördersystem für Laderäume, insbesondere für Flugzeuge, aber auch für LKW's, bekannt, bei dem in den Boden des Frachtaderaums Transportschienen eingelassen sind, in denen angetriebene Fördermittel aufgenommen sind. Bei den Fördermitteln handelt es sich um eine Art Hebe-Boden, der ein zu förderndes Ladegut untergreift und anhebt. Das Fördermittel, also der Hebeboden, wird anschließend mit der auf dem Hebeboden liegenden Ladung mittels eines Seils in den Frachtraum gezogen. Ein umlaufender Förderboden ist bei diesem System nicht vorgesehen.

Aus DE 10 2015 004 326 B3 ist ein gattungsgemäßer Fahrzeugaufbau mit integriertem Endlos-Förderband gemäß dem Oberbegriff von Anspruch 1 bekannt.

Die Andrückrollen des Förderbands sind in einer vordefinierten Position fest angebracht, so dass eine Einstellung oder Nachkorrektur des Bandlaufs nicht vorgesehen ist.

Aus DE 20 2014 101 099 U1 ist ein Anhängefahrzeug mit einem umlaufenden Förderband bekannt, welches beidseitig in an den Seitenwänden vorgesehenen Führungen geführt wird. Hierdurch soll eine Abdichtung zumindest für Schüttgut (bis hin zu kleinen Rapskörnern) geschaffen werden. Das System umfasst eine Führungswalze 29, die jedoch nicht als Andrückrolle für das Förderband dient, sondern den Förderboden 13 in Richtung Bodenkonstruktion 3 auf das Niveau der Kette 22 anhebt. Da die Führungswalze 29 lediglich zum Anheben des Förderbandes dient und da der Förderboden durch in den Seitenwänden 4, 5 des Aufbaus angebrachten Nuten 36 geführt wird, ist eine Einstellbarkeit der Führungswalze 29 nicht erforderlich und auch nicht vorgesehen.

Aus DE 886 875 B ist ein Anhänger mit Förderboden bekannt. Andrückrollen sind in diesem System nicht vorgesehen, der Förderboden wird unter dem Fahrzeugboden vielmehr durch Führungsschienen abgestützt.

Aus DE 1 274 968 A ist eine Fördereinrichtung an einem Transportfahrzeug mit einem Kratzboden bekannt, der eine spezielle Steuerung des Vorschubmechanismus umfasst. Diese Steuerung soll ein einfaches Zu- und Abschalten des Kratzbodenantriebes ermöglichen und dazu beitragen, den Kratzboden, punktgenau an- und abzuschalten, um so ein insgesamt gleichmäßiges Streubild zu erhalten. Andrückrollen für den Kratzboden sind nicht vorgesehen.

Aus EP 2 338 727 A1 ist ein Lastkraftwagen mit einem Laderaum und einem darin angebrachten Doppelförderband bekannt. Zwar werden die Förderbänder an Ihrer Unterseite von Rollen 70 abgestützt, die Rollen 70 dienen jedoch nicht zur Steuerung des Bandlaufs.

Aus JP H03 125722 U ist ein Vakuumbandtrockner bekannt, der in der Nahrungsmittelverarbeitung oder der Arzneimittelherstellung einsetzbar ist. Das Förderband umläuft zwei voneinander beabstandete Tragrollen. Das Spannen des Förderbandes erfolgt mittels einer Spannvorrichtung, mittels derer der Abstand der beiden Rollen zueinander variierbar ist. Je weiter die beiden Rollen auseinandergedrückt werden, desto straffer wird das Förderband gespannt.

Nachteilig an den als Stand der Technik genannten Fahrzeugaufbauten mit einer Fördereinrichtung in Form eines Endlos-Förderbandes ist somit, dass eine Regulation des Bandlaufs schwierig oder unmöglich ist.

Die Aufgabe der Erfindung ist, einen Fahrzeugaufbau mit integriertem Endlos-Förderband der eingangs genannten Art zu entwickeln, bei dem eine wirksame Bandsteuerung unabhängig von den Tragrollen durchgeführt werden kann.

Diese Aufgabe wird bei einem gattungsgemäßen Fahrzeugaufbau mit den Merkmalen des Anspruchs 1 gelöst, bei dem wenigstens eine der Andrückrollen mit ihrer Längsachse um ein erstes seitliches, ortsfestes Lager der Andrückrolle beweglich angeordnet ist.

Von besonderem Vorteil ist hierbei die leichte Zugänglichkeit der Andrückrolle im Vergleich zu der in aller Regel wesentlich schwerer zugänglichen Kopf- bzw. Hecktrommel des Förderbandes.

In einer bevorzugten Ausführung ist das bewegliche Lager in einer zum Obertrum bzw. Untertrum planparallelen Ebene oder entlang eines durch einen Radius um einen Befestigungspunkt des beweglichen Lagers definierten Bogens verschwenkbar. Eine solche Verschwenkbarkeit kann beispielsweise realisiert werden, indem ein dem ortsfesten ersten Lager gegenüber liegendes zweites Lager der Andrückrolle relativ zu dem Längsträger beweglich angeordnet ist. Dies ist vorteilhaft, da der am Fahrzeugrahmen angeordnete Bandförderer eine kompakte Einheit ausbildet, welche dicht verbaut und seitlich abgedeckt ist und auch von unten keinen Platz für eine Verstellung der Andrückrolle in einer zum Untertrum senkrechten Ebene zulässt. Insbesondere vorteilhaft ist, dass die Lageänderung der Andrückrolle nur auf einer Seite des Fahrzeugrahmens und nur an einer vorgesehenen Stelle benutzerfreundlich vorgenommen werden kann.

Vorzugsweise ist am zweiten, beweglichen Lager ein Regulierungsmittel vorgesehen, mit welchem die Position dieses Lagers justiert werden kann. Bei dem Regulierungsmittel kann es sich beispielsweise um einen Linearantrieb oder um eine Stellschraube handeln. Mit Hilfe eines solchen Regulierungsmittels kann der Bandlauf einfach an unterschiedliche Ladungen beziehungsweise Beladungsarten angepasst werden. Die Andrückrolle ist somit an einer Seite fixiert und an der anderen Seite beweglich gelagert. Durch Betätigung des Regulierungsmittels wird das bewegliche Lager, und damit die Andrückrolle, entweder in Richtung der Hecktrommel gezogen und an der Seite, an der das bewegliche Lager sitzt, gespannt oder das Lager wird von der Hecktrommel weg bewegt und die Spannung des Förderbandes wird reduziert. Ein ungleichmäßig gespanntes Förderband orientiert seinen Lauf in der Regel zur stärker gespannten Seite hin. Indem die Förderbandspannung in den Seitenbereichen des Bandes mittels einer durch das Regulierungsmittel bewirkten einseitigen Bewegung der Andrückrolle beeinflusst werden kann, kann auch der Bandlauf gesteuert bzw. justiert werden.

Das Regulierungsmittel kann von der Fahrzeugkabine aus beispielsweise elektrisch oder kabellos ferngesteuert werden. Hierdurch ist die Bedienung des Regulierungsmittels schnell und komfortabel. Vorzugsweise wird jedoch ein einfaches, manuell betätigbares Regulierungsmittel in Form einer Stellschraube eingesetzt, da ein solches, manuelles Regulierungsmittel sehr kostengünstig ist.

Vorteilhaft ist, dass die Stellschraube an einem dafür vorgesehenen, von einer Seite des Chassis zugänglichen Platz, nämlich am beweglichen Lager der Andrückrolle angeordnet ist, so dass die Bandzentrierung am Chassis mit einem oder zumindest wenigen Handgriffen von außen durchgeführt werden kann.

Ein genereller Vorteil des erfindungsgemäßen Fahrzeugaufbaus mit Endlos-Förderband liegt auch darin, dass für die Bandzentrierung keine unterhalb des Untertrums liegenden Steuerelemente, wie Lenk- bzw. Zentrierstationen, eingesetzt werden müssen, die bei den frei stehenden Förderbändern viel Platz in Anspruch nehmen.

Bei Förderbändern, die in beiden Laufrichtungen fördern sollen, ist die Steuerung des Bandlaufs schwieriger, weil das Transportband dazu neigt, dann, wenn es in der einen Richtung eingesteuert ist, bei Förderbetrieb in die andere Richtung (Reversierbetrieb) zu verlaufen. Daher ist die erfindungsgemäße, einfache Bandsteuerung, welche lediglich einfache Handgriffe von außen am Längsträger des Chassis erfordert, gerade für den Fahrzeugaufbau gemäß Erfindung gut geeignet.

In einer weiteren bevorzugten Ausgestaltung entspricht der Radius des Bogens, der die Schwenkbewegung des beweglichen Lagers charakterisiert, etwa einer Hälfte der Entfernung zwischen zwei übereinander angeordneten Befestigungspunkten (A) und (B) des beweglichen Lagers der Andrückrolle, wobei das Lager und damit die Andrückrolle um den Befestigungspunkt (A) verschwenkbar ist.

Der Radius reicht bis zur Längsachse der Andrückrolle und beschreibt damit eine Bogenlinie, welche mit der vorgenannten, zum Untertrum planparallelen Ebene tangiert. Da die Lageänderung der Andrückrolle nur in einem geringfügigen, beispielsweise 2 bis 5 mm betragenden Bereich vorgenommen wird, kann man den kurzen Abschnitt der Bogenlinie, also den im tangentialen Bereich liegenden Abschnitt, als gerade Linie betrachten. Mit anderen Worten: Auch die Verschwenkbarkeit um den Befestigungspunkt A lässt sich praktisch in der erwähnten Ebene realisieren.

Alternativ zu einer Verschwenkung der Andrückrolle um einen Befestigungspunkt kann das Regulierungsmittel auch so angeordnet sein, dass das bewegliche Lager insgesamt linear nach vorn oder hinten bewegt wird. Beispielsweise könnte analog zu der Stellschraube 25, die im Befestigungspunkt B angreift, eine zweite Stellschraube vorgesehen sein, die an den Befestigungspunkt A angreift. Wenn beide Stellschrauben gleichmäßig bewegt werden, wird auch die Andrückrolle gleichmäßig in einer Ebene um das auf der anderen Seite des Förderbandes angeordnete ortsfeste Lager verschwenkt.

Als Regulierungsmittel kann auch ein Hydraulik- oder Pneumatikzylinder vorgesehen sein, der mit seiner einen Seite fest an den Fahrzeugrahmen und mit der anderen Seite an das bewegliche Lager gekoppelt ist. Dabei kann vorgesehen sein, dass mittels des Hydraulik- oder Pneumatikzylinders das bewegliche Lager insgesamt verschwenkt oder um einen Befestigungspunkt geschwenkt wird.

Weiterhin ist es vorteilhaft, wenn wenigstens eine der Andrückrollen und/oder die Kopftrommel und/oder die Hecktrommel eine ballige Kontur aufweist mit einem im Mittelbereich vorgesehenen Durchmesser (D1), der größer ist als ein in den Seitenbereichen vorgesehener Durchmesser (D2). Durch die ballige Kontur, die somit an einer oder mehrerer der mit dem Endlos-Förderband in Kontakt stehenden Rollen realisiert werden kann, wird ein Selbstjustierungseffekt erreicht. Ein mittels der beweglichen Andrückrolle voreingestellter Bandlauf kann so durch den Selbstjustierungseffekt aufrechterhalten oder die Aufrechterhaltung des voreingestellten Bandlaufes zumindest unterstützt werden.

Der Fahrzeugaufbau kann eine Spannvorrichtung aufweisen, mit welcher der Abstand von Kopftrommel zu Hecktrommel veränderbar ist, so dass mittels der Spannvorrichtung das Endlos-Förderband gespannt oder entspannt werden kann. Vorzugsweise kann es sich bei dieser Spannvorrichtung um eine hydraulische oder pneumatische Vorrichtung handeln, die an die beweglich gelagerte Kopftrommel oder Hecktrommel gekoppelt ist. Beispielsweise können Hydraulik- oder Pneumatikzylinder vorgesehen sein, die an den beiden seitlichen Enden die Kopf- oder Hecktrommel angebracht sind und diese bei Betätigung linear verschieben und so das Endlos-Förderband spannen oder entspannen.

In einer bevorzugten Ausführungsform ist eine Justiereinrichtung zur automatischen Ausrichtung des Bandlaufs vorgesehen, mit welcher eine Bewegung des Endlos-Förderbands in eine Seitenrichtung kompensierbar ist, so dass das Endlos-Förderband auch bei wechselnden Belastungen nicht dauerhaft in eine Seitenrichtung ausweicht. Die weiter oben schon beschriebene Justierung des Bandlaufs mittels eines Stellmittels wird hierdurch automatisiert. Die automatische Justierung wird nach Art eines Regelkreises realisiert. Dabei bildet der mittige Geradeauslauf des Förderbandes einen Sollwert. Der mit dem Regelkreis geregelte Geradeauslauf verhält sich robust gegen angreifende Störgrößen, beispielsweise einer ungleichmäßigen Lastverteilung auf dem Förderband.

Der Regelkreis kann auf verschiedene Arten realisiert werden. In einer ersten Ausführung umfasst der Regelkreis eine automatische Justiereinrichtung mit wenigstens einem, vorzugsweise zwei, Geberzylindern, welche über ein Andrückmittel, vorzugsweise eine Andrückrolle, an das Endlos-Förderband gekoppelt ist beziehungsweise sind. Das sich in eine Seitenrichtung bewegende Förderband drückt somit gegen das Andrückmittel und bewirkt dadurch, dass das Regulierungsmittel, mit dem der Bandlauf justierbar ist, die seitliche Verschiebung des Endlos-Förderbandes kompensiert.

Vereinfacht gesagt, wird dadurch, dass das Förderband zu einer Seite hin ausweicht, bewirkt, dass es an der anderen Seite gespannt wird und dadurch selbsttätig wieder in den gewünschten Geradeauslauf überführt wird. Ist der Geradeauslauf erreicht, wird die SpannStellung so lange beibehalten, bis das Band wieder in die eine oder andere Richtung ausweicht. Bei einem hydraulischen System wird die auf die Andrückrolle einwirkende Kraft auf die Zylinderstange des Geberzylinders übertragen. Der Kolben des Geberzylinders drückt dann solange Öl in Richtung des mit dem Geberzylinder verbundenen Spannzylinders, bis der vom Förderband auf die Kolbenstange des Geberzylinders ausgeübte Druck sich auf null reduziert hat und der Geradeauslauf des Bandes wieder hergestellt ist.

Die Justiereinrichtung kann in die Spannvorrichtung, mittels derer das Förderband gespannt wird, integriert sein (integrierte Justiereinrichtung). Soweit die Spannvorrichtung auf hydraulischer oder pneumatischer Basis arbeitet, wird das Spannsystem mittels eines Steuerventils in eine Sperr-Stellung gebracht, so dass das Spannsystem den Regelkreis nicht mehr beeinflusst.

Vorzugsweise sind bei der integrierten Justiereinrichtung die Geberzylinder mittels einer Kreuzschaltung mit zwei Spannzylindern der Spannvorrichtung verbunden, so dass bei einer Belastung des Geberzylinders auf der einen Seite des Endlos-Förderbands der Spannzylinder auf der anderen Seite des Förderbandes betätigt wird. Hierbei macht man sich den Umstand zu Nutze, dass ein auf einer Welle laufendes Förderband immer in die Richtung läuft, in welcher die größere Spannung anliegt. Ein beispielsweise zur linken Seite hin ausweichendes Förderband wird somit wieder in Geradeaus gebracht, indem es an der rechten Seite nachgespannt wird.

Bei einer anderen Ausführungsform ist an Stelle einer integrierten Justiereinrichtung eine autonome Justiereinrichtung vorgesehen. Unter einer autonomen Justiereinrichtung wird eine Justiereinrichtung verstanden, die ein in sich geschlossenes System bildet und unabhängig von anderen Einrichtungen ist.

Eine autonome Justiereinrichtung umfasst vorzugsweise die zwei Geberzylinder sowie einen Gleichlaufzylinder. Geberzylinder und Gleichlaufzylinder sind durch Leitungen miteinander verbunden. Öl, das aus einem Geberzylinder herausgedrückt wird, wird über dieses Leitungssystem in den Gleichlaufzylinder hineingedrückt. Vorzugsweise werden die Geberzylinder durch zwei einfach wirkende Hydraulikzylinder ausgebildet.

Der Gleichlaufzylinder ist mit seiner einen Kolbenkammer mit der Kolbenkammer des ersten Geberzylinders verbunden und mit seiner anderen Kolbenkammer mit der Kolbenkammer des zweiten Geberzylinders. Ein zur Seite hin ausweichendes Förderband drückt somit über das Andrückmittel auf die Kolbenstange des dort angeordneten Geberzylinders. Der Geberzylinder wiederum drückt Öl in die ihm zugeordnete Kolbenkammer des Gleichlaufzylinders und bewegt das weiter oben schon beschriebene Regulierungsmittel, so dass der Geradeauslauf des Förderbandes wieder hergestellt wird. Vorzugsweise wirkt der Gleichlaufzylinder auf eine Andrückrolle ein. Alternativ dazu kann aber auch vorgesehen sein, dass der Gleichlaufzylinder an die Kopf- oder Hecktrommel gekoppelt ist und diese bewegt.

In der Zeichnung wird die Erfindung näher erläutert. Die Figuren zeigen:
- Fig. 1: ein Fahrzeugaufbau gemäß Erfindung, mit sichtbarem Laderaum, in einer perspektivischen Ansicht;
- Fig. 2: das Chassis des Fahrzeugaufbaus gemäß Fig. 1 mit eingebautem Endlos-Förderband, in einer perspektivischen Ansicht;
- Fig. 3: ein Endlos-Förderband, in einer perspektivischen Ansicht;
- Fig. 4: eine schematische Anordnung der Andrückrolle am Untertrum, in einer Seitenansicht;
- Fig. 5: Detail der Anordnung der Andrückrolle am Untertrum, in einer perspektivischen Ansicht;
- Fig. 6: ein Teil des Endlos-Förderbandes in Draufsicht auf den Obertrum, mit schematisch angedeuteter Verschwenkbarkeit der unterhalb des Untertrums befindlichen Andrückrolle;
- Fig. 7: Schema der Verschwenkbarkeit des beweglichen Lagers um seinen Befestigungspunkt am Längsträger;
- Fig. 8: Beispiel einer balligen Andrückrolle bzw. Kopf- oder Hecktrommel;
- Fig. 9: einen Fahrzeugaufbau mit Endlos-Förderband und in die Spannvorrichtung integrierter Justiereinrichtung;
- Fig. 10: den Schaltplan von Spannvorrichtung und Justiereinrichtung gemäß Fig. 9;
- Fig. 11: einen Fahrzeugaufbau mit Endlos-Förderband und autonomer Justiereinrichtung;
- Fig. 12: den Schaltplan der Justiereinrichtung gemäß Fig. 11.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

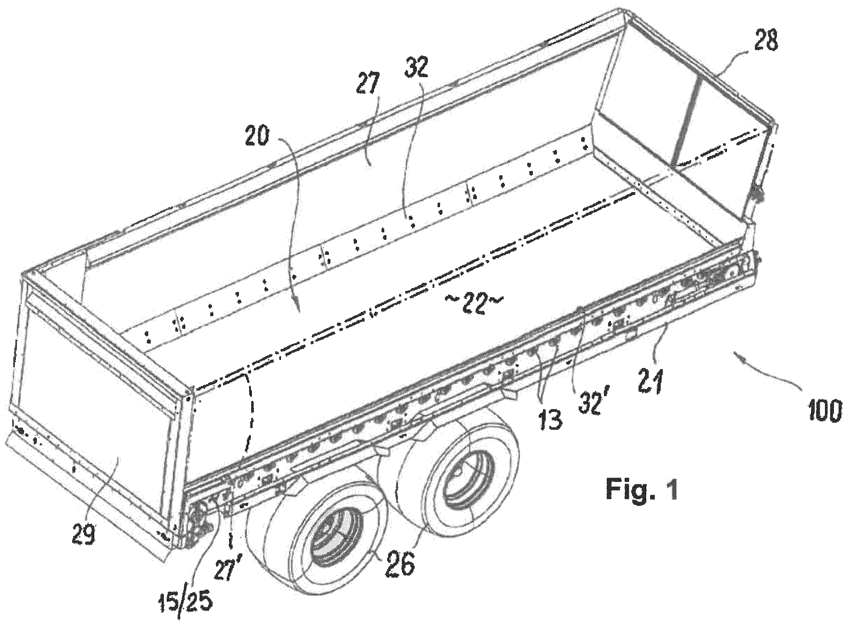

In der Fig. 1 ist ein Fahrzeugaufbau 100, hier: ein landwirtschaftlicher Anhänger abgebildet, welcher ein Chassis 21 auf Rädern 26 und einen durch einen Boden 22, zwei Seitenwände 27, 27', eine Vorderwand 28 und eine Heckwand 29 begrenzten Laderaum 20 umfasst. Die als Heckklappe ausgeführte Heckwand 25 ist beweglich und lässt sich hydraulisch verschwenken.

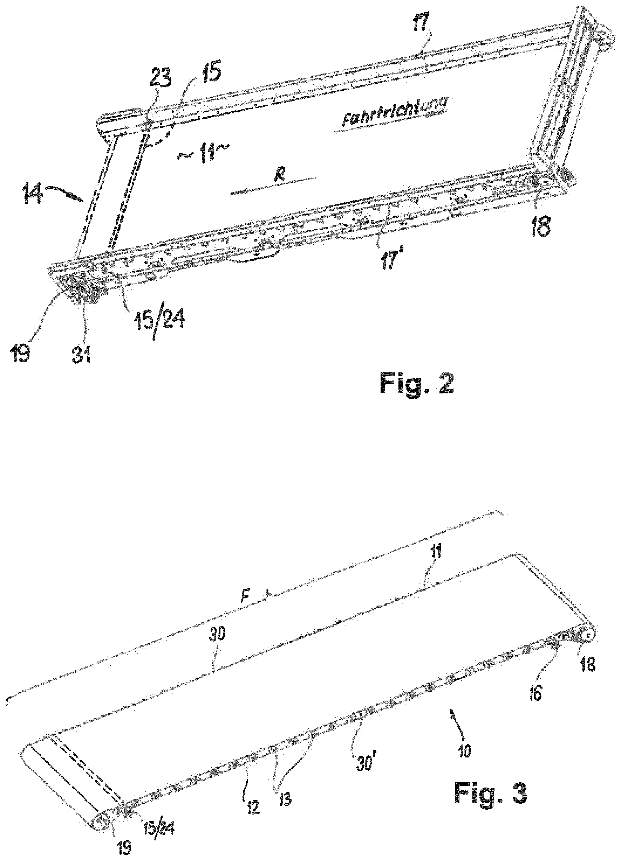

Wie die Figuren 2 und 3 zeigen, weist das Chassis 21 zwei parallel zueinander verlaufende Längsträger 17, 17' auf. Weiterhin umfasst das Chassis 21 mehrere, senkrecht zur Längsausrichtung des Chassis 21 angeordnete, nicht gezeigte versteifende Querträger auf. Mit "R" ist Förderrichtung bezeichnet.

Die Funktion des Bodens 22 übernimmt ein bewegliches, eine Kopftrommel 18 und eine Hecktrommel 19 umschlingendes Endlos-Förderband 10 (vgl. Fig. 3) von einer konstanten Förderlänge F, welches einen herkömmlichen, plattenförmigen Boden des Laderaums ersetzt. Mit den Bezugszahlen 30, 30' sind Seitenkanten des Endlos-Förderbandes 10 bezeichnet. Angetrieben wird das Endlos-Förderband 10 von einem reversiblen Antrieb 31 (vgl. Fig. 2) an der Hecktrommel 19.

Das Chassis 21 ist als stabile Rahmenkonstruktion gefertigt, so dass es im Arbeitseinsatz auftretende Lastspitzen aufnehmen kann ohne verzogen zu werden beziehungsweise seine Kontur zu verändern. Das ist eine Voraussetzung dafür, dass die Kopf- und Hecktrommel 18, 19 rechtwinklig zum Bandlauf ausgerichtet sind.

Ferner ist der Fig. 1 eine sich entlang des Endlos-Förderbandes 10 erstreckende, gegenüber dem Boden 22 geneigte Dichtungsleiste 32 zu entnehmen. In einer spiegelsymmetrischen Anordnung gegenüber der Dichtungsleiste 32 verläuft eine zweite Dichtungsleiste 32', deren obere Längskante in Figur 1 sichtbar ist. Die beiden Dichtungsleisten 32, 32' decken die Seitenkanten 30, 30' des Endlos-Förderbandes 10 ab und verhindern Verunreinigungen unterhalb des Förderbandes, verursacht beispielsweise durch kleinkörnige Ladung.

Das Endlos-Förderband 10 weist einen Obertrum 11, einen Untertrum 12 und mehrere dazwischen liegende, an Längsträgern 17, 17' des Chassis 21 gelagerte, demontierbare Tragrollen 13 (vgl. Fig. 3) auf. Der an der Hecktrommel 19 auslaufende Obertrum 11 bildet dort einen Abwurfbereich 14 aus, an welchem optional ein nicht gezeigter Abstreifer angeordnet werden kann. Der Untertrum 12 stützt sich an Andrückrollen 15, 16 (Umlenkrollen) ab, welche zwischen der Kopftrommel 18 und Hecktrommel 19 angeordnet sind und den Untertrum 12 spannen.

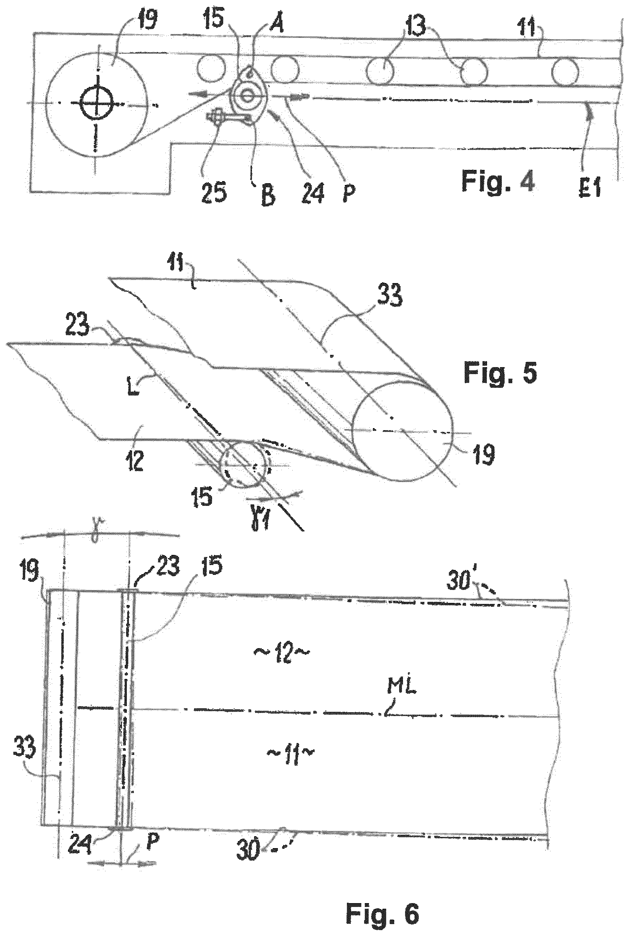

Die vor der Hecktrommel 19 platzierte Andrückrolle 15 ist in einer zum Untertrum 12 planparallelen Ebene E1 (vgl. Fig. 4) verschwenkbar angeordnet. Die Verschwenkbarkeit der Andrückrolle 15 erfolgt in beiden mit Pfeilen P bezeichneten Richtungen mit Hilfe eines Regulierungsmittels 25. Die Andrückrolle 15 ist über ein erstes Lager 23 ortsfest am Längsträger 17 (vgl. Fig. 2) und über ein zweites Lager 24 beweglich am Längsträger 17' angeordnet.

Als Regulierungsmittel 25 ist eine manuell betätigbare Stellschraube (Augenschraube) gewählt, welche an einem unteren Befestigungspunkt B (am Längsträger 17') des beweglichen Lagers 24 sitzt.

Die Figuren 5 und 6 veranschaulichen das Prinzip der Verschwenkbarkeit der Andrückrolle 15. An dem in Betrieb gesetzten, vorher ausgerichteten Endlos-Förderband 10 gibt es keine Abweichung des Bandlaufes. Die Seitenkanten 30, 30' des Obertrums 11 bzw. des Untertrums 12 verlaufen senkrecht zu einer Längsachse 33 der Hecktrommel 19. Die Andrückrolle 15 ist mit ihrer Längsachse L achsparallel zur Hecktrommel 19 angeordnet.

Bei ungleichmäßiger Veränderung des inneren Spannungszustandes des Bandes, beispielsweise auf Grund der asymmetrischen Beladung oder auf Grund der Wärmeausdehnung kann sich der Bandlauf ändern. Dieser Zustand ist in Fig. 6 zu sehen. Die Seitenkanten 30, 30' des Bandes sind nicht mehr rechtwinklig gegenüber der Längsachse 33 der Hecktrommel 19 (bzw. Kopftrommel 18) angeordnet. Das Band beginnt mit seiner Seitenkante 30 am Längsträger zu scheuern beziehungsweise. zu flattern. Im Endeffekt kann es hierdurch zur Beschädigung oder gar Zerstörung des teuren Bandes kommen.

Die erfindungsgemäße Bandsteuerung kann dem Missstand abhelfen. Im dargestellten Ausführungsbeispiel ist hierzu eine Stellschraube (Fig. 4, Regulierungsmittel 25) vorgesehen, die über den Befestigungspunkt B mit dem beweglichen Lager 24 verbunden ist. Mittels der Stellschraube ist die Ausrichtung der Andrückrolle 15 einstellbar. Durch sensibles Drehen der Einstellschraube wird das bewegliche Lager 24 um den Befestigungspunkt A verschwenkt und das bewegliche Lager 24 der Andrückrolle 15 entlang der Ebene E1 etwas verschoben. Wie die Fig. 5 zeigt, ändert sich dabei die Winkellage der Andrückrolle 15. Ihre Längsachse L weicht von der achsparallelen Anordnung um einen geringfügigen Winkel γ1 (beispielsweise im Winkelbereich ± 1,5°) ab. Die durch die Stellschraube hervorgerufenen Steuerkräfte zwingen das Band zu einer Rückverlagerung in Richtung Mittellinie ML (vgl. Fig. 6), so dass im Ergebnis die Seitenkanten 30, 30' wieder senkrecht zur Längsachse 33 der Hecktrommel 19 (bzw. Kopftrommel 18) ausgerichtet sind.

Im dargestellten Ausführungsbeispiel ist ein manuell einstellbares Regulierungsmittel 25 in Form einer Stellschraube vorgesehen. Alternativ hierzu kann auch ein maschinelles Stellmittel, beispielsweise ein elektrisch angetriebener, gegebenenfalls mittels einer durch Fernsteuerung verstellbarer, Linearantrieb vorgesehen sein.

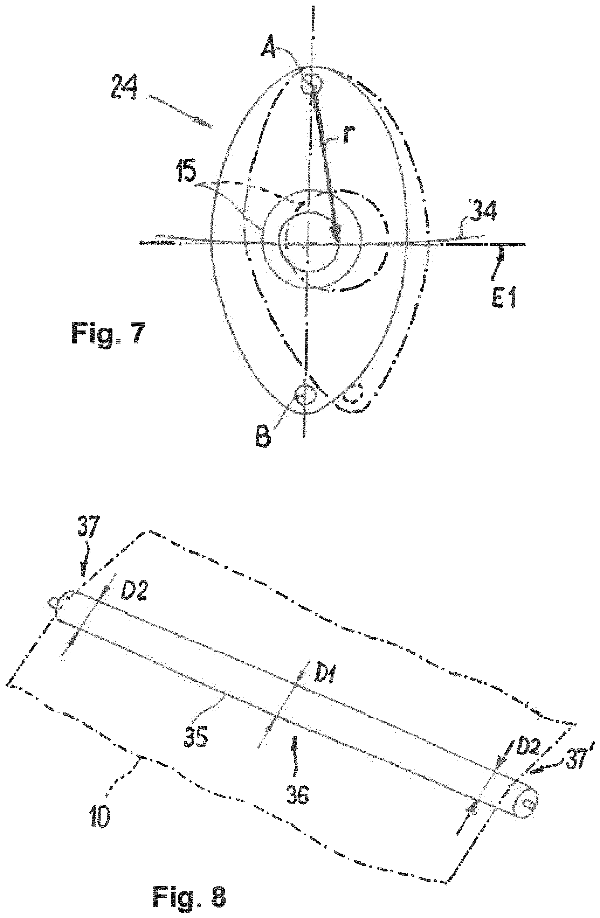

Soll das Lager 24 lediglich um seinen Befestigungspunkt A (vgl. Figuren 4 und 7) am Längsträger 17' verschwenkbar sein, ändert sich das Ergebnis kaum, denn die Andrückrolle 15 wird eine sehr kleine Bewegung entlang eines Bogens 34 ausüben, dessen Radius (r) etwa einer Hälfte der Entfernung zwischen den übereinander angeordneten Befestigungspunkten A und B entspricht. Diese bogenartige Verlagerung ist praktisch einer Verlagerung entlang der Ebene E1 gleich.

Fig. 8 zeigt das Beispiel einer im Wesentlichen zylindrischen Rolle mit ballenförmiger Kontur 35. Die Kontur 35 weist in ihrem Mittelbereich 36 einen größeren Durchmesser D1 auf, als in ihren Randbereichen 37 und 37' (Durchmesser D2) und kann somit als ballig bezeichnet werden. Eine solche ballige Kontur 35 kann je nach Bedarf an einer oder mehrerer der das Förderband kontaktierenden bzw. tragenden Rollen 15, 16, 18 oder 19, und/oder gegebenenfalls auch an den Rollen 13 vorgesehen sein um einen Selbstzentrierungseffekt am Förderband 10 zu bewirken beziehungsweise einen solchen Selbstzentrierungszweck zu unterstützen.

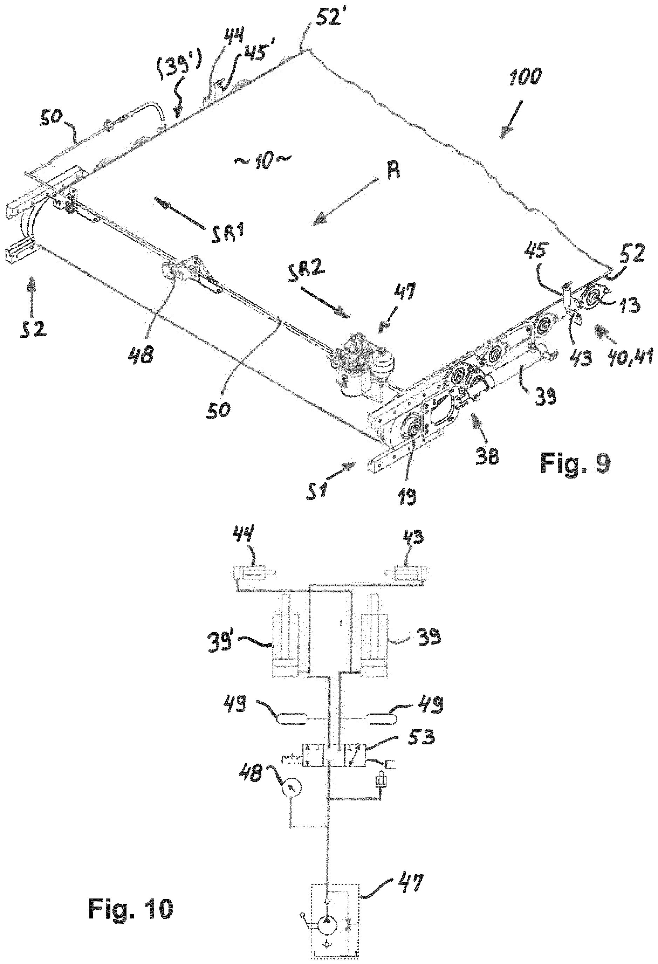

Fig. 9 zeigt einen Fahrzeugaufbau 100 mit Endlos-Förderband 10 und einer Justiereinrichtung 40, bei der es sich um eine in die Spannvorrichtung 38 integrierte Justiereinrichtung 41 handelt. Die Hecktrommel 19 ist zunächst mit den Spannzylindern 39, 39' spannbar. Mittels der Spannzylinder 39, 39' ist somit der Abstand von Hecktrommel 19 und Kopftrommel 20 veränderbar. Das Endlos-Förderband 10 wird somit mittels dieser Zylinder gespannt beziehungsweise entspannt. Das Spannen kann beispielsweise mittels einer Handpumpe 47 erfolgen. Vorzugsweise wird das Endlos-Förderband 10 soweit angespannt, bis im System ein vorgewählter Druck, beispielsweise 120 bar oder 150 bar, anliegt. Um die Spannung zu kontrollieren ist ein Druckmesser 48 vorgesehen. Dieses System funktioniert insoweit unabhängig davon ob:
- gar keine Justiereinrichtung,
- eine manuelle Justiereinrichtung in Form eines Regulierungsmittels 25, beispielsweise einer Stellschraube, wie sie in Fig. 4 gezeigt ist,
- oder eine automatische Justiereinrichtung, wie sie im Folgenden noch beschrieben wird, vorgesehen ist.

Grundsätzlich ist das Endlos-Förderband 10 so eingestellt, dass es dann, wenn es in Bewegung versetzt wird, gleichmäßig geradeaus läuft. Der Geradeauslauf wird, wie weiter oben schon beschrieben, durch Justierung des beweglichen Lagers 24 mittels des Einstellmittels 25 realisiert.

Die Justiereinrichtung 40, 41, 42 funktioniert automatisch nach Art eines Regelkreises. Benachbart zu Seitenkanten 52, 52' des Endlos-Förderbandes 10 sind Andrückmittel 45, 45' angeordnet. Um den Reibwiderstand gering zu halten sind als Andrückmittel 45, 45' vorzugsweise drehbare Andrückrollen vorgesehen. Die Andrückmittel 45, 45' sind an die Kolbenstangen zweier Geberzylinder 43, 44 gekoppelt. Weicht das Endlos-Förderband in eine Seitenrichtung SR1 oder SR2 aus, drückt es gegen eines der Andrückmittel 45, 45' und bewirkt, dass der mit der Kolbenstange verbundene Kolben des Geberzylinders 43, 44 Öl durch Leitungen 50 drückt.

Der Geberzylinder 43 ist mittels einer Leitung 50 mit dem Spannzylinder 39' verbunden während der Geberzylinder 44 mit dem Spannzylinder 39 verbunden ist. Hierdurch ist eine Kreuzschaltung realisiert. Das heißt: Der Geberzylinder 43 an der einen Seite S1 des Fahrzeugaufbaus 100 ist mit dem Spannzylinder 39 an der anderen Seite S2 verbunden während der Geberzylinder 44 an der Seite S2 mit dem Spannzylinder 39 an der Seite S1 verbunden ist. Vereinfacht gesagt wird dann, wenn das Förderband 10 an der linken Seite des Fahrzeuges gegen die Andrückrolle drückt, an der rechten Seite des Fahrzeuges automatisch das Förderband gespannt und umgekehrt.

Wie bereits weiter oben erwähnt, richtet der Lauf des Förderbandes 10 sich in der Regel in die Richtung aus, in die es gespannt wird. Wenn das Förderband 10 an der Seite S1 in Richtung SR1 den Geberzylinder 43 betätigt, wird es auf der Seite S2 durch das in den Spannzylinder 39' gedrückte Öl automatisch gespannt. Lässt der Druck auf den Geberzylinder 43 nach, weil der Lauf des Förderbandes 10 durch das Spannen auf der Seite S2 in Richtung SR2 verändert wurde, wird der gewünschte Geradeauslauf des Förderbandes 10 wiederhergestellt.

Analog dazu bewirkt eine Betätigung des Geberzylinders 44 auf der Seite S2 ein Spannen des Förderbandes auf der Seite S1.

Der Schaltplan der in Figur 9 enthaltenen integrierten Justiereinrichtung ist in Fig. 10 dargestellt. Das Hydrauliksystem ist mittels einer Pumpe, bei der es sich im dargestellten Ausführungsbeispiel um eine Handpumpe 47 handelt, mit Druck beaufschlagbar. Der Druck im System wird mittels eines Druckmessers 48 gemessen und vorzugsweise auf 150 bar voreingestellt. Vorzugsweise ist eine Druckanzeige vorgesehen, um das Druckniveau zu überwachen.

Um die Handpumpe 47 vom Leitungssystem der integrierten Justiereinrichtung 41 abzukoppeln und die Verbindungen von Geberzylindern und Spannzylindern in ein geschlossenes System zu überführen, ist ein Ventil 53 vorgesehen. Bei der in Fig. 10 dargestellten Stellung des Ventils 53 handelt es sich um eine Sperrstellung, in der das geschlossene System realisiert ist. Um Druckschwankungen im geschlossenen System auszugleichen und das vorgewählte Druckniveau aufrechtzuerhalten sind Druckspeicher 49 in das System integriert.

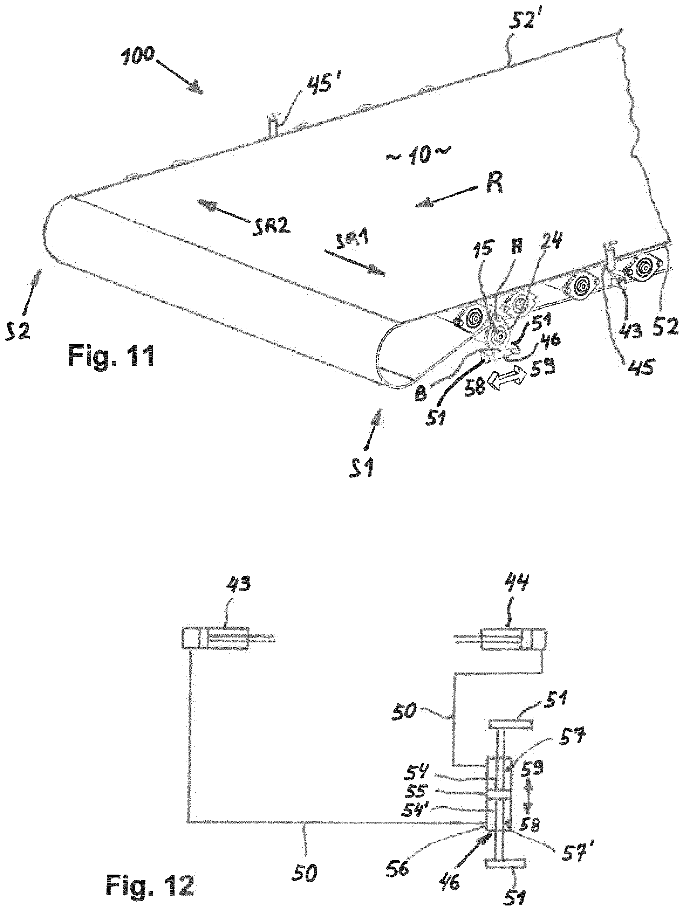

Fig. 11 zeigt ein zweites Ausführungsbeispiel eines Fahrzeugaufbaus 100 mit Endlos-Förderband 10 und einer Justiereinrichtung 40. Da die Justiereinrichtung 40 in diesem Beispiel unabhängig von der Spannvorrichtung 38 ist, wird sie als autonome Justiereinrichtung 42 bezeichnet. Dabei entsprechen Funktion und Anordnung von Andrückmittel 45, 45' und Geberzylindern 43, 44 der Funktion und Anordnung dieser Bauteile in der integrierten Justiereinrichtung 41 gemäß Fig. 9.

Im Unterschied zur integrierten Justiereinrichtung 41 sind die Geberzylinder 43, 44, bei der autonomen Justiereinrichtung 42 jedoch nicht an die Spannzylinder des Endlos-Förderbandes 10 gekoppelt, sondern über einen Gleichlaufzylinder 46 an das bewegliche Lager 24 der Andrückrolle 15. Der Gleichlaufzylinder 46 übernimmt insofern die Funktion des weiter oben schon beschriebenen Regulierungsmittels 25, mit dem der Lauf des Förderbandes 10 einstellbar ist. Man kann auch sagen: Der Gelichlaufzylinder 46 bildet ein automatisch arbeitendes Regulierungsmittel 25.

Figur 12 zeigt einen Schaltplan der in Figur 11 enthaltenen automatischen Justiereinrichtung 42. Der Gleichlaufzylinder 46 umfasst zwei Kolbenstangen 54, 54' und einen dazwischen liegenden Kolben 55. Der Kolben 55 ist in einem Zylinderrohr 56 beweglich gelagert und trennt zwei Zylinderräume 57, 57' voneinander. Die Kolbenstangen 54, 54' sind mittels Festlagern 51 an den Fahrzeugaufbau gekoppelt. Das Zylinderrohr ist an den Befestigungspunkt B des beweglichen Lagers 24 gekoppelt. Bei Bewegung des Zylinderrohrs 56 wird somit das bewegliche Lager 24, und damit auch die Andrückrolle 15, um den Befestigungspunkt A geschwenkt. Wie weiter oben bereits im Detail erläutert, ist der Bandlauf durch Schwenken der Andrückrolle 24 justierbar und damit auch regelbar.

Bei Ausweichen des Förderbandes 10 in Richtung SR1 oder SR2 wird das an der jeweiligen Seite angeordnete Andrückmittel 45, 45' und hierüber auch der entsprechende Geberzylinder 43 oder 44 betätigt. Bei Betätigung des Geberzylinder 43 wird Öl über Leitung 50 in den Innenraum 57' geleitet. Da der Gleichlaufzylinder 46 mit seinen Kolbenstangen 54, 54' fest gelagert ist, bewegt sich bei Beaufschlagung eines Zylinderinnenraums 57, 57' mit Öl nicht der Kolben 55, sondern das den Kolben 55 umgebende Zylinderohr 56. Wird vom Geberzylinder 43 über die Leitung 50 Öl in den Zylinderinnenraum 57' geleitet, so bewegt sich das Zylinderrohr 56 in Richtung 58 und verschwenkt das bewegliche Lager 24 sich um den Befestigungspunkt A in diese Richtung. Da sich das bewegliche Lager 24 im dargestellten Ausführungsbeispiel nicht in einer linearen Richtung bewegt, sondern um den Befestigungspunkt A geschwenkt wird, sind das Zylinderrohr 56 und das beweglichem Lager 24 nicht starr miteinander verbunden, sondern beispielsweise durch einen am Zylinderrohr 56 vorhandenen Stift, der von einem am beweglichen Lager 24 vorhandenen Langloch aufgenommen wird, so aneinander gekoppelt, dass einerseits die Bewegung vom Zylinderrohr 56 auf das bewegliche Lager 24 übertragbar ist und andererseits Spannungen zwischen den Bauteilen vermieden werden.

Die Andrückrolle 15 wird somit immer dann, wenn das Förderband 10 zu einer Seite hin ausweicht, mittels des Gleichlaufzylinders 56 verschwenkt und nachjustiert. Das System ist weitgehend wartungsfrei und an einem Fahrzeugaufbau 100 mit manuellem Regulierungsmittel 25 einfach nachrüstbar.

### Bezugszeichenliste

- 10: Endlos-Förderband
- 11: Obertrum
- 12: Untertrum
- 13: Tragrolle
- 14: Abwurf bereich
- 15, 16: Andrückrolle
- 17, 17': Längsträger
- 18: Kopftrommel
- 19: Hecktrommel
- 20: Laderaum
- 21: Chassis
- 22: Boden
- 23: erstes Lager (ortsfest)
- 24: zweites Lager (beweglich)
- 25: Regulierungsmittel
- 26: Rad
- 27, 27': Seitenwand
- 28: Vorderwand
- 29: Heckwand
- 30, 30': Seitenkante
- 31: Antrieb
- 32: Dichtungsleiste
- 33: Längsachse (v. 19)
- 34: Bogen
- 35: Kontur
- 36: Mittelbereich
- 37, 37': Randbereich
- 38: Spannvorrichtung
- 39; 39': Spannzylinder
- 40: Justiereinrichtung
- 41: integrierte Justiereinrichtung
- 42: autonome Justiereinrichtung
- 43: erster Geberzylinder
- 44: zweiter Geberzylinder
- 45, 45': Andrückmittel
- 46: Gleichlaufzylinder
- 47: Handpumpe
- 48: Druckmesser
- 49: Druckspeicher
- 50: Leitung
- 51: Festlager
- 52, 52': Seitenkante (von 10)
- 53: Ventil
- 54, 54': Kolbenstange
- 55: Kolben
- 56: Zylinderrohr
- 57, 57': Zylinderraum
- 58: Richtung
- 59: Richtung

- 100: Fahrzeugaufbau

- A, B: Befestigungspunkt
- D1: Durchmesser
- D2: Durchmesser
- E1: Ebene
- F: Förderlänge
- L: Längsachse (v. 15)
- ML: Mittellinie
- P: Pfeil
- r: Radius
- R: Förderrichtung
- S1, S2: Seite 1, Seite 2
- SR1, SR2: Seitenrichtung

- γ1: Winkel

## Patentansprüche

1. Fahrzeugaufbau (100) zum Transport von Schütt- und/oder Stückgut, umfassend:
- ein Chassis (21) und einen rechteckigen Laderaum (15), dessen Boden (22) ein Endlos-Förderband (10) umfasst, welches in einen heckseitigen Abwurfbereich (14) ausläuft,
- wobei das Endlos-Förderband (10) einen Obertrum (11) und einen Untertrum (12) und dazwischen liegende, voneinander beabstandete Tragrollen (13) aufweist, welche jeweils quer zu einer Förderrichtung (R) liegend an Längsträgern (17, 17') des Chassis (21) gelagert sind,
- wobei der Obertrum (11) sich an den Tragrollen (13) abstützt,
- wobei der Untertrum (12) sich auf zwei Andrückrollen (15, 16) abstützt, welche zwischen einer Kopftrommel (18) und einer Hecktrommel (19) des Endlos-Förderbandes (10) angeordnet sind und den Untertrum (12) anspannen,
**dadurch gekennzeichnet, dass**
- wenigstens eine der Andrückrollen (15, 16) mit ihrer Längsachse (L) um ein erstes seitliches, ortsfestes Lager (23) der Andrückrolle (15, 16) beweglich angeordnet ist, so dass der Bandlauf steuerbar ist,
- wobei ein zweites seitliches Lager (24) der Andrückrolle (15, 16) entlang eines durch einen Radius (r) um einen Befestigungspunkt (A) des zweiten Lagers (24) definierten Bogens (34) verschwenkbar ist, indem das dem ersten, ortsfesten Lager (23) gegenüber liegende zweite Lager (24) der Andrückrolle (15, 16) gegenüber dem Längsträger (17, 17') beweglich angeordnet ist.

2. Fahrzeugaufbau (100) nach Anspruch 1, **dadurch gekennzeichnet, dass** am zweiten Lager (24) ein Regulierungsmittel (25) vorgesehen ist, mit welchem die Position des zweiten Lagers (24) justierbar ist.

3. Fahrzeugaufbau (100) nach Anspruch 2, **dadurch gekennzeichnet, dass** als Regulierungsmittel (25) eine Stellschraube eingesetzt ist.

4. Fahrzeugaufbau (100) nach Anspruch 2, **dadurch gekennzeichnet, dass** das Regulierungsmittel (25) einen Linearantrieb, wie einen Schubspindelantrieb oder einen Hydraulik- oder Pneumatikzylinder, umfasst.

5. Fahrzeugaufbau (100) nach einem der Ansprüche 1 bis 4, **dadurch gekennzeichnet, dass** der Radius (r) des Bogens (34) etwa einer Hälfte der Entfernung zwischen zwei übereinander angeordneten Befestigungspunkten (A) und (B) des beweglichen Lagers (24) der Andrückrolle (15, 16) entspricht, wobei das Lager (24) und damit die Andrückrolle (15, 16) um den Befestigungspunkt (A) verschwenkbar ist.

6. Fahrzeugaufbau (100) nach einem der Ansprüche 1 bis 5, **dadurch gekennzeichnet, dass** wenigstens eine der Andrückrollen (15, 16) und/oder die Kopftrommel (18) und/oder die Hecktrommel (19) eine ballige Kontur (34) aufweist mit einem im Mittelbereich (36) vorgesehenen Durchmesser (D1), der größer ist als ein in den Seitenbereichen (37, 37') vorgesehener Durchmesser (D2).

7. Fahrzeugaufbau (100) nach einem der Ansprüche 1 bis 6, **dadurch gekennzeichnet, dass** eine Spannvorrichtung (38) vorgesehen ist, mit welcher der Abstand von Kopftrommel (18) zu Hecktrommel (19) veränderbar ist, so dass mittels der Spannvorrichtung (38) das Endlos-Förderband (10) gespannt oder entspannt werden kann.

8. Fahrzeugaufbau (100) nach einem der Ansprüche 1 bis 7, **dadurch gekennzeichnet, dass** eine Justiereinrichtung (40) zur automatischen Ausrichtung des Bandlaufs vorgesehen ist mit welcher eine Bewegung des Endlos-Förderbandes (10) in eine Seitenrichtung (SR1, SR2) kompensierbar ist, so dass das Endlos-Förderband (10) auch bei wechselnden Belastungen nicht dauerhaft in eine Seitenrichtung (SR1, SR2) ausweicht.

9. Fahrzeugaufbau (100) nach Anspruch 8, **dadurch gekennzeichnet, dass** die Justiereinrichtung (40) wenigstens einen Geberzylinder (43, 44) umfasst, welcher über ein Andrückmittel (45, 45') vorzugsweise eine Andrückrolle, an das Endlos-Förderband (10) gekoppelt ist und bei einer Verschiebung des Endlos-Förderbandes (10) in eine der Richtungen (SR1; SR2) so auf das Regulierungsmittel (25) einwirkt, dass mittels des Regulierungsmittel (25) die seitliche Verschiebung des Endlos-Förderbandes (10) kompensiert wird.

10. Fahrzeugaufbau (100) nach Anspruch 8 oder 9, **dadurch gekennzeichnet, dass** als Justiereinrichtung (40) eine in die Spannvorrichtung (38) integrierte Justiereinrichtung (41) vorgesehen ist.

11. Fahrzeugaufbau (100) nach Anspruch 10, **dadurch gekennzeichnet, dass** bei der integrierten Justiereinrichtung (41) die Geberzylinder (43, 44) mittels einer Kreuzschaltung (46) mit zwei Spannzylindern (39, 39') der Spannvorrichtung (38) verbunden sind, so dass bei einer Belastung des Geberzylinders (43, 44) auf der einen Seite des Endlos-Förderbands (10) der Spannzylinder (39; 39') auf der anderen Seite des Förderbandes betätigt wird.

12. Fahrzeugaufbau (100) nach einem der Ansprüche 8 oder 9, **dadurch gekennzeichnet, dass** als Justiereinrichtung (40) eine autonome Justiereinrichtung (42) vorgesehen ist.

13. Fahrzeugaufbau (100) nach Anspruch 12, **dadurch gekennzeichnet, dass** die autonome Justiereinrichtung (42) durch ein geschlossenes System gebildet wird, welches die beiden Geberzylinder (42, 43) sowie einen Gleichlaufzylinder (46) umfasst.

## Claims

1. A vehicle body (100) for transporting bulk and/or general cargo, comprising:
- a chassis (21) and a rectangular loading space (15), the floor (22) of which comprises an endless conveyor belt (10) which terminates in a rear discharge area (14),
- wherein the endless conveyor belt (10) has an upper run (11) and a lower run (12) and support rollers (13) lying therebetween and spaced apart from one another, which support rollers (13) are mounted in each case lying transversely to a conveying direction (R) on side frame members (17, 17') of the chassis (21),
- wherein the upper run (11) is supported on the support rollers (13),
- wherein the lower run (12) is supported on two pressure rollers (15, 16) that are arranged between a head drum (18) and a tail drum (19) of the endless conveyor belt (10) and which tension the lower run (12),
**characterized in that**
- at least one of the pressure rollers (15, 16) is arranged with its longitudinal axis (L) movable about a first lateral, stationary bearing (23) of the pressure roller (15, 16), so that the belt run can be controlled,
- wherein a second lateral bearing (24) of the pressure roller (15, 16) is pivotable along an arc (34) defined by a radius (r) about a fastening point (A) of the second bearing (24), **in that** the second bearing (24) of the pressure roller (15, 16), which is situated opposite the first, stationary bearing (23), is arranged movably with respect to the side frame member (17, 17').

2. The vehicle body (100) as claimed in claim 1, **characterized in that** an adjustment means (25) is provided on the second bearing (24), with which the position of the second bearing (24) can be adjusted.

3. The vehicle body (100) as claimed in claim 2, **characterized in that** a set screw is used as a regulating means (25).

4. The vehicle body (100) as claimed in claim 2, **characterized in that** the regulating means (25) comprises a linear actuator, such as a push spindle actuator or a hydraulic or pneumatic cylinder.

5. The vehicle body (100) as claimed in one of the claims 1 to 4, **characterized in that** the radius (r) of the arc (34) corresponds to approximately half the distance between two fastening points (A) and (B), arranged one above the other, of the moveable bearing (24) of the pressure roller (15, 16), wherein the bearing (24) and thus the pressure roller (15, 16) can be pivoted about the fastening point (A).

6. The vehicle body (100) as claimed in one of the claims 1 to 5, **characterized in that** at least one of the pressure rollers (15, 16) and/or the head drum (18) and/or the tail drum (19) has a convex contour (34) with a diameter (D1) provided in the central region (36) which is greater than the diameter (D2) provided in the end regions (37, 37').

7. The vehicle body (100) as claimed in one of the claims 1 to 6, **characterized in that** a tensioning device (38) is provided with which the distance between the head drum (18) and the tail drum (19) can be changed so that the endless conveyor belt (10) can be tensioned or slackened by means of the tensioning device (38).

8. The vehicle body (100) as claimed in one of the claims 1 to 7, **characterized in that** an adjusting device (40) for the automatic alignment of the belt run is provided, by means of which a movement of the endless conveyor belt (10) in a lateral direction (SR1, SR2) can be compensated, so that the endless conveyor belt (10) does not permanently deviate in a lateral direction (SR1, SR2) even under varying loads.

9. The vehicle body (100) as claimed in claim 8, **characterized in that** the adjusting device (40) comprises at least one master cylinder (43, 44) which is coupled to the endless conveyor belt (10) via a pressure means (45, 45'), preferably a pressure roller, and, in the event of a displacement of the endless conveyor belt (10) in one of the directions (SR1; SR2), acts on the regulating means (25) in such a way that the lateral displacement of the endless conveyor belt (10) is compensated for by means of the regulating means (25).

10. The vehicle body (100) as claimed in claim 8 or 9, **characterized in that** an adjusting device (41) integrated into the clamping device (38) is provided as the adjusting device (40).

11. The vehicle body (100) as claimed in claim 10, **characterized in that,** in the integrated adjusting device (41), the master cylinders (43, 44) are connected by means of a cross-circuit (46) to two tensioning cylinders (39, 39') of the tensioning device (38), so that, when the master cylinder (43, 44) on one side of the endless conveyor belt (10) is loaded, the tensioning cylinder (39; 39') on the other side of the conveyor belt is actuated.

12. The vehicle body (100) as claimed in one of the claims 8 or 9, **characterized in that** an autonomous adjustment device (42) is provided as the adjustment device (40).

13. The vehicle body (100) as claimed in claim 12, **characterized in that** the autonomous adjustment device (42) is formed by a closed system comprising the two master cylinders (42, 43) and a synchronised cylinder (46).

## Revendications

1. Superstructure de véhicule (100) permettant de transporter des produits en vrac et/ou au détail, comprenant :
- un châssis (21) et un volume de chargement rectangulaire (15) dont le fond (22) comprend une bande transporteuse sans fin (10) qui se termine par une zone d'éjection (14) côté arrière,
- la bande transporteuse sans fin (10) présentant un brin supérieur (11) et un brin inférieur (12) et des rouleaux porteurs intermédiaires (13) espacés les uns des autres qui sont montés respectivement transversalement à un sens de la marche (R) en position couchée sur des longerons (17, 17') du châssis (21),
- le brin supérieur (11) prenant appui sur les rouleaux porteurs (13),
- le brin inférieur (12) prenant appui sur deux galets presseurs (15, 16) qui sont disposés entre un tambour de tête (18) et un tambour arrière (19) de la bande transporteuse sans fin (10) et mettent en tension le brin inférieur (12),
**caractérisée en ce que**
- au moins l'un des galets presseurs (15, 16) est disposé de manière mobile par son axe longitudinal (L) autour d'un premier palier latéral fixe (23) du galet presseur (15, 16) de sorte que la trajectoire de la bande peut être commandée,
- un deuxième palier latéral (24) du galet presseur (15, 16) étant pivotant le long d'un arc (34) défini par un rayon (r) autour d'un point de fixation (A) du deuxième palier (24) **en ce que** le deuxième palier (24) du galet presseur (15, 16), opposé au premier palier fixe (23), est disposé de manière mobile par rapport au longeron (17, 17').

2. Superstructure de véhicule (100) selon la revendication 1, **caractérisée en ce qu'au** niveau du deuxième palier (24), un moyen de régulation (25) est prévu qui permet d'ajuster la position du deuxième palier (24).

3. Superstructure de véhicule (100) selon la revendication 2, **caractérisée en ce qu'une** vis de réglage est mise en œuvre comme moyen de régulation (25).

4. Superstructure de véhicule (100) selon la revendication 2, **caractérisée en ce que** le moyen de régulation (25) comprend un entraînement linéaire, tel qu'un entraînement par vis de commande d'avance ou un vérin hydraulique ou pneumatique.

5. Superstructure de véhicule (100) selon l'une quelconque des revendications 1 à 4, **caractérisée en ce que** le rayon (r) de l'arc (34) correspond approximativement à une moitié de la distance entre deux points de fixation (A) et (B), disposés l'un au-dessus de l'autre, du palier mobile (24) du galet presseur (15, 16), le palier (24), et donc le galet presseur (15, 16), étant pivotant autour du point de fixation (A).

6. Superstructure de véhicule (100) selon l'une quelconque des revendications 1 à 5, **caractérisée en ce qu'au** moins l'un des galets presseurs (15, 16) et/ou le tambour de tête (18) et/ou le tambour arrière (19) présentent un contour bombé (34) ayant un diamètre (D1) prévu dans la partie centrale (36) qui est supérieur à un diamètre (D2) prévu dans les parties latérales (37, 37').

7. Superstructure de véhicule (100) selon l'une quelconque des revendications 1 à 6, **caractérisée en ce qu'un** dispositif de mise en tension (38) est prévu qui permet de modifier la distance entre le tambour de tête (18) et le tambour arrière (19) de sorte que le dispositif de mise en tension (38) permet de tendre ou de détendre la bande transporteuse sans fin (10).

8. Superstructure de véhicule (100) selon l'une quelconque des revendications 1 à 7, **caractérisée en ce qu'un** dispositif d'ajustage (40) pour l'alignement automatique de la trajectoire de la bande est prévu qui permet de compenser un mouvement de la bande transporteuse sans fin (10) dans une direction latérale (SR1, SR2) de sorte que la bande transporteuse sans fin (10) ne s'échappe pas durablement dans une direction latérale (SR1, SR2) même sous des charges variables.

9. Superstructure de véhicule (100) selon la revendication 8, **caractérisée en ce que** le dispositif d'ajustage (40) comprend au moins un maître-cylindre (43, 44) qui est couplé avec la bande transporteuse sans fin (10) par un moyen presseur (45, 45'), de préférence un galet presseur, et agit en cas de décalage de la bande transporteuse sans fin (10) dans l'une des directions (SR1 ; SR2) sur le moyen de régulation de telle sorte que le moyen de régulation (25) permet de compenser le décalage latéral de la bande transporteuse sans fin (10).

10. Superstructure de véhicule (100) selon la revendication 8 ou 9, **caractérisée en ce qu'un** dispositif d'ajustage (41) intégré dans le dispositif de mise en tension (38) est prévu comme dispositif d'ajustage (40).

11. Superstructure de véhicule (100) selon la revendication 10, **caractérisée en ce que** sur le dispositif d'ajustage intégré (41), les maîtres-cylindres (43, 44) sont reliés au moyen d'un montage en croix (46) à deux vérins de mise en tension (39, 39') du dispositif de mise en tension (38) de sorte qu'en cas de mise en charge du maître-cylindre (43, 44) sur un côté de la bande transporteuse sans fin (10), le vérin de mise en tension (39 ; 39') sur l'autre côté de la bande transporteuse est actionné.

12. Superstructure de véhicule (100) selon l'une quelconque des revendications 8 ou 9, **caractérisée en ce qu'un** dispositif d'ajustage autonome (42) est prévu comme dispositif d'ajustage (40).

13. Superstructure de véhicule (100) selon la revendication 12, **caractérisée en ce que** le dispositif d'ajustage autonome (42) est formé par un système fermé qui comprend les deux maîtres-cylindres (42, 43) ainsi qu'un vérin synchrone (46).
